# EUROPEAN PATENT SPECIFICATION

(11) **EP 3 043 088 B1**
(45) Date of publication and mention of the grant of the patent: **13.03.2019**
(21) Application number: 15305005.9
(22) Date of filing: 06.01.2015
(51) Int. Cl.: F16F 15/26, F16C 33/60, F16C 33/62

(54) **Balancing shaft assembly and internal combustion engine comprising such a balancing shaft assembly**
Ausgleichswellenanordnung und Verbrennungsmotor mit solch einer Ausgleichswellenanordnung
Ensemble arbre d'équilibrage et moteur à combustion interne comprenant un tel ensemble arbre d'équilibrage

(43) Date of publication of application: 13.07.2016
(73) Proprietor: Aktiebolaget SKF, 415 50 Göteborg (SE)
(72) Inventor: Detraigne, Jeremy, 86300 CHAUVIGNY (FR); Viault, Samuel, 37360 SAINT-ANTOINE-DU-ROCHER (FR)
(74) Representative: Kloker, Markus

(56) References cited:
- EP-A1- 2 156 070
- EP-A1- 2 287 493
- DE-A1-102008 015 135
- DE-U1-202013 100 896
- JP-A- 2010 242 917
- JP-A- 2011 133 081

## Description

The present invention concerns a balancing shaft assembly. The invention also concerns an internal combustion engine comprising such a balancing shaft assembly.

Internal combustion engines are often equipped with balancing shafts systems adapted to compensate varying loads on crankshafts. As balancing shafts have eccentric balancing masses which generate heavy loads, the rotation of balancing shafts is allowed by bearings which need specific characteristics, for example optimal surface roughness and hardness. The manufacturing cost of these bearing is therefore relatively high.

It is already known to directly provide the inner ring of the bearing on a surface of the balancing shaft. In such a case, the balancing shaft is therefore obtained with a manufacturing process involving successive forging, rectifying, grinding and inductive case hardening steps, and which is quite complex. Moreover, the material of the balancing shaft must have mechanical characteristics which allow forming a part of a bearing. Such a material is relatively expensive.

It is also known, from JP-A-2011/133081, to provide a bearing with a half inner ring mounted on a balancing shaft manufactured from cast iron. The half inner ring is placed on the side of the balancing masses. However, such as design implies that an empty space exists on the area of the balancing shaft which is not covered by the half inner ring. The passage of the rolling elements between the empty space and the half inner ring generates noise and friction. To solve this issue, it is known to provide an inner ring covering 360°, but such a design is expensive.

It is also known from EP-2 156 070-A1 to provide a bearing with an inner ring divided into a first portion and a second portion formed by a half-ring. The inner ring has an outer raceway surface formed by a semicylindrical surface of the first portion and by a semicylindrical surface of the half-ring. The half-ring has an outer radius equal to the outer radius of the first portion.

The aim of the invention is to provide a new balancing shaft assembly, in which the manufacturing costs and noise emission are reduced with respect to the prior art.

To this end, the invention concerns a balancing shaft assembly comprising a balancing shaft rotatable with respect to a housing around a central rotation axis, at least one bearing allowing the rotation of the balancing shaft with respect to the housing, each bearing comprising an inner ring coupled in rotation to the balancing shaft, an outer ring fixed with respect to the housing, and rolling elements, said at least one bearing being mounted on a bearing area of the balancing shaft. This balancing shaft assembly is characterized in that the inner ring is divided into a first portion formed by semicylindrical body mounted against the bearing area of the balancing shaft, and a second portion formed by a half ring mounted around a semicylindrical portion of the bearing area of the balancing shaft, the inner ring having an outer raceway surface formed by a semicylindrical surface of half ring, said half ring having an outer radius equal to the outer radius of the half cylindrical body.

Thanks to the invention, the raceway of the inner ring is continuous and noise emission is low. Moreover, as the balancing shaft is not in contact with the rolling elements, the material of the balancing shaft may have low mechanical characteristics and be inexpensive. Thus, the manufacturing cost of the balancing shaft assembly is reduced.

According to further aspects of the invention which are advantageous but not compulsory, such a balancing shaft assembly may incorporate one or several of the following features:
- The semicylindrical body is made of a synthetic material.
- The synthetic material in which the semicylindrical body is made is polyamide.
- The half ring is fastened to the semicylindrical body and to the balancing shaft by clamping.
- The half ring extends around the rotation axis on an angular sector having an apex angle superior to 180°, and the semicylindrical body comprises two shoulders which form angular ends of the cylindrical surface of the semicylindrical body, said shoulders being adapted to receive longitudinal edges of the half ring.
- The shoulders have a depth, with respect to the outer radius of the semicylindrical body, equal to the thickness of the half ring.
- The semicylindrical body comprises a planar surface parallel to the central rotation axis and adapted to be in contact with a corresponding planar surface of the bearing area of the balancing shaft.
- The half ring is located on the same side of the balancing shaft as balancing masses.
- The half ring is made of a metallic material.
- The half ring is made from a sheet of steel.

The invention also concerns an internal combustion engine comprising at least one balancing shaft assembly as mentioned here-above.

The invention will now be explained in correspondence with the annexed drawings, as an illustrative example. In the annexed drawings,
- Figure 1 is a perspective view of a balancing shaft assembly according to the invention;
- Figure 2 is an exploded perspective view of the balancing shaft assembly of figure 1, from a different angle;
- Figure 3 is an exploded perspective view of the balancing shaft assembly of figures 1 and 2, from a different angle;
- Figure 4 is a sectional view along a longitudinal plane of the balancing shaft assembly of figures 1 to 3, in position with respect to a supporting housing;
- Figure 5 is a sectional view, at a larger scale, along a transversal plane V-V of the balancing shaft assembly of figures 1 to 4; and
- Figure 6 is a view similar to figure 5, in an exploded configuration, a reduced scale and an inverted vertical orientation.

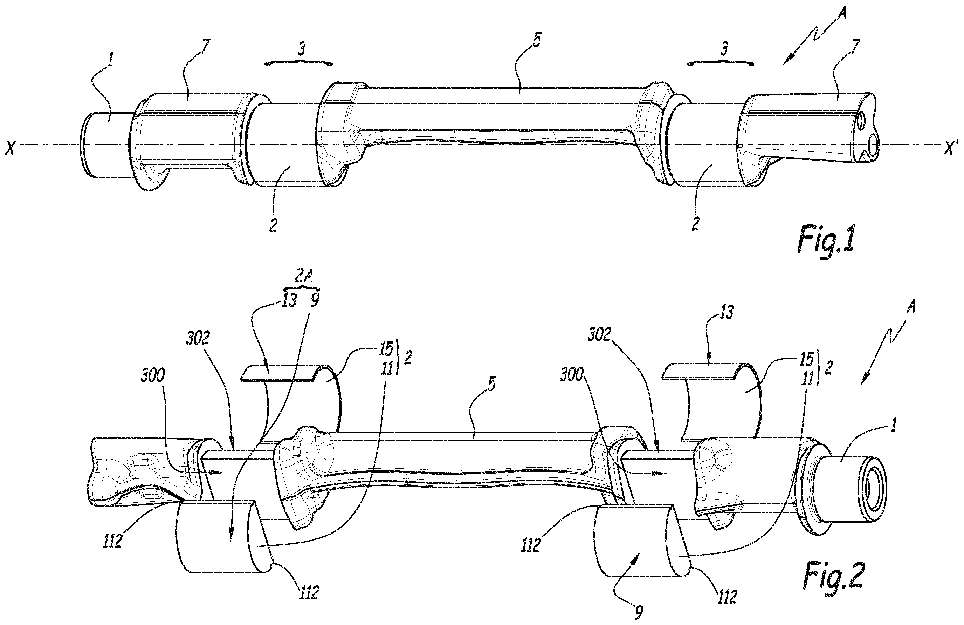

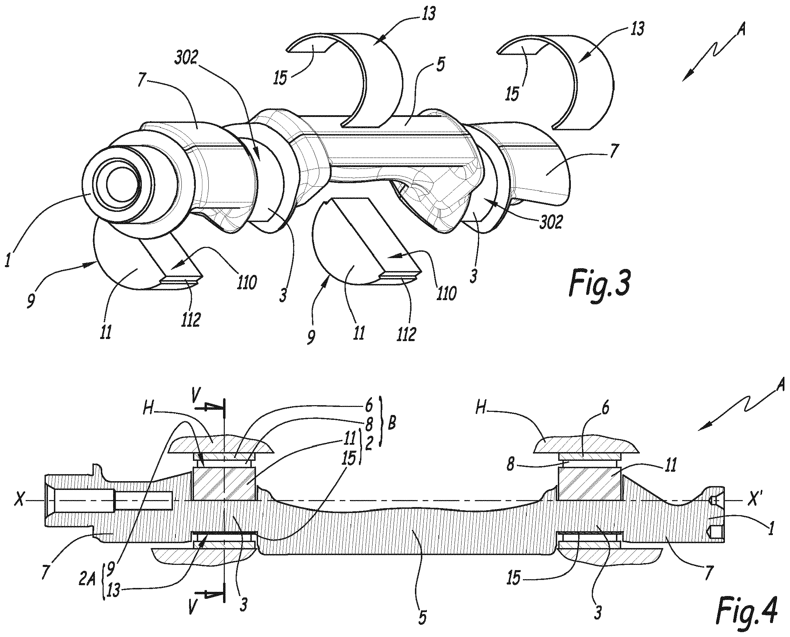

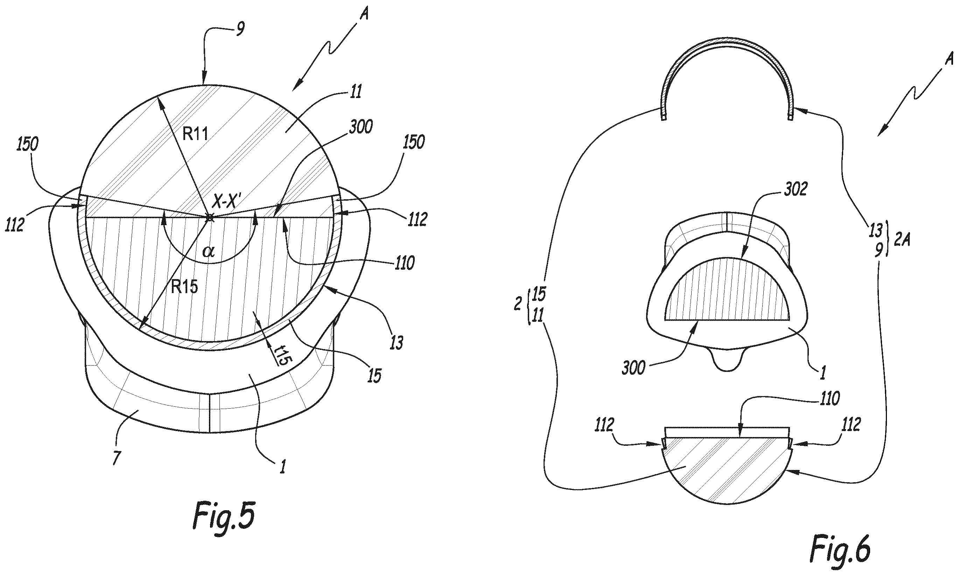

On figures 1 to 6 is represented a balancing shaft assembly A comprising a balancing shaft 1 rotatable around a central rotation axis X-X', with respect to a housing H represented only on figure 4.

Balancing shaft assembly A may belong to an internal combustion engine which may comprise several balancing shaft assemblies A.

Balancing shaft assembly A comprises two bearings B allowing the rotation of balancing shaft 1 with respect to housing H. Each bearing B comprises an inner ring 2 coupled in rotation to balancing shaft 1, an outer ring 6 fixed with respect to housing H, and rolling elements, such as rollers 8, arranged between inner ring 2 and outer ring 6. Outer ring 6 and rollers 8 are represented only on figure 4.

According to a non-shown embodiment of the invention, bearings B may comprise, instead of rollers 8, other types of rolling elements, such as balls or needles.

Bearings B are mounted on bearing areas 3 of balancing shaft 1, formed by longitudinal sections of balancing shaft 1 separated by an eccentric portion 5. Each bearing area 3 is located longitudinally between eccentric portion 5 and balancing masses 7 which provide the technical effect of balancing shaft 1.

In the following paragraphs, the adjective "semicylindrical" is used in a non-exclusive meaning to describe the general shape of some elements of the invention.

The inner ring 2 of each bearing B is divided into two portions. A first portion is formed by a semicylindrical body 11 mounted against one of bearing areas 3. Semicylindrical body 11 therefore comprises a planar surface 110 parallel to central rotation axis X-X' and adapted to be in contact with a corresponding planar surface 300 of bearing area 3.

The second portion of inner ring 2 is formed by a half ring 15 mounted around a semicylindrical portion 302 of bearing area 3. Half cylindrical portion 302 is centered on axis X-X' and is opposed to semicylindrical body 11 with respect to axis X-X'. Inner ring 2 comprises an outer raceway surface 2A formed by a semicylindrical surface 9 of semicylindrical body 11, and by an outer semicylindrical surface 13 of half ring 15.

To guarantee that surface 2A is continuous, raceway half ring 15 has an outer radius R15 equal to the outer radius R11 of semicylindrical body 11.

Thanks to this design, the outer surface of balancing shaft 1 does not form a bearing surface and is not in contact with rolling elements. Balancing shaft 1 can therefore be manufactured in a metallic material having common mechanical properties and whose outer surfaces do not need to be machined with high accuracy. The cost of the manufacturing process of balancing shaft 1 is therefore reduced. For example, balancing shaft 1 may be manufactured in a single forging operation.

Half ring 15 is fastened to semicylindrical body 11 and to balancing shaft 1 by clamping. To this end, half ring 15 extends on an angular sector having an apex angle α superior to 180°. Preferably, apex angle α is superior to 200°. Due to the value of the apex angle superior to 180°, half ring 15 does not exactly comprise a semicylindrical surface 9. However, the adjective "semicylindrical" depicts the general shape of surface 9.

Semicylindrical body 11 comprises two shoulders 112 which form angular ends of cylindrical surface 9. Shoulders 112 limit cylindrical surface 9 in the circumferential direction and extend parallel to axis X-X'. Shoulders 112 are adapted to receive longitudinal edges 150 of half ring 15. Longitudinal edges 150 extend parallel to axis X-X' and limit half ring 15 in the circumferential direction. Shoulders 112 have a depth, with respect to cylindrical surface 9, equal to the thickness t15 of half ring 15.

Shoulders 112 are designed so that no empty space exists on raceway surface 2A between cylindrical surface 13 and cylindrical surface 9, in order to prevent noise from occurring during the rolling of rollers 8 on the interface between half ring 15 and semicylindrical body 11.

Thanks to shoulders 112 and to the fact that half-ring 15 extends on an angular sector having an apex angle superior to 180°, half ring 15 is prevented from being unwillingly separated from semicylindrical body 11, because edges 150 of half ring 15 clamp semicylindrical body 11 against bearing area 3.

Due to the presence of shoulders 112, semicylindrical body 11 has not an exact semicylindrical shape. However, in this case, the adjective "semicylindrical" depicts the general shape of body 11.

During mounting of half ring 15 around semicylindrical body 11 and bearing area 3, half ring 15 needs to be slightly deformed so that edges 150 slide past the interface between planar surfaces 110 and 300 and lock themselves into shoulders 112. Mounting of semicylindrical body 11 and half ring 15 on balancing shaft 1 is therefore simple and quick.

Semicylindrical body 11 is preferably made of a synthetic material. For example, semicylindrical body 11 may be made of polyamide such as PA 4.6 or PA 6.6. This reduces the weight and manufacturing cost of semicylindrical body 11.

Semicylindrical body 11 may be either hollow or solid.

Half ring 15 is made of a metallic material, for example from a sheet of steel, having mechanical properties suitable for sustaining loads and surface machining and treatment adapted for the rolling of rolling elements. The manufacturing cost of half ring 15 is inferior to the manufacturing cost of a massive inner ring.

Half rings 15 are located on the side of balancing shaft 1 on which balancing masses 7 are located, which is the side which exerts the highest loads on inner ring 2 during rotation of balancing shaft 1. During operation of balancing shaft assembly A, half rings 15 are therefore able to sustain the loads exerted by balancing masses 7. On the contrary, the loads exerted on semicylindrical bodies 11 are lower than the loads exerted on half rings 15, and semicylindrical bodies 11 do not need specific mechanical properties. Semicylindrical body 11 permits to guide rollers and prevents half ring 15 from rotating around axis X-X' with respect to balancing shaft 1.

In this example, semicylindrical body 11 and bearing areas 3 are designed so that planar surfaces 110 and 300 comprise central rotation axis X-X'. In a non-shown embodiment, planar surfaces 110 and 300 may be shifted from axis X-X', while still be parallel to axis X-X'.

The technical features of the embodiments and variants described here-above can be combined to form new embodiments of the invention.

## Claims

1. Balancing shaft assembly (A) comprising:
- a balancing shaft (1) rotatable with respect to a housing (H) around a central rotation axis (X-X'),
- at least one bearing (B) allowing the rotation of the balancing shaft (1) with respect to the housing (H),
each bearing (B) comprising an inner ring (2) coupled in rotation to the balancing shaft (1), an outer ring (6) fixed with respect to the housing (H), and rolling elements (8), said at least one bearing (B) being mounted on a bearing area (3) of the balancing shaft (1),
the inner ring (2) being divided into a first portion (11) and a second portion formed by a half ring (15), the inner ring (2) having an outer raceway surface (2A) formed by a semi-cylindrical surface (9) of the first portion (11) and by a semi-cylindrical surface (13) of the half ring (15), said half ring (15) having an outer radius (R15) equal to the outer radius (R11) of the first portion (11),
**characterized in that** the first portion (11) is formed by a semicylindrical body mounted against the bearing (3) of the balancing shaft (1),
and **in that** the second portion formed by the half ring (15) is mounted around a semicylindrical portion (302) of the bearing area (3) of the balancing shaft (1).

2. Balancing shaft assembly according to claim 1, wherein the semicylindrical body (11) is made of a synthetic material.

3. Balancing shaft assembly according to claim 2, wherein the synthetic material in which the semicylindrical body (11) is made is polyamide.

4. Balancing shaft assembly according to any preceding claim, wherein the half ring (15) is fastened to the semicylindrical body (11) and to the balancing shaft (1) by clamping.

5. Balancing shaft assembly according to claim 4, wherein the half ring (15) extends around the rotation axis (X-X') on an angular sector having an apex angle (α) superior to 180°, and wherein the semicylindrical body (11) comprises two shoulders (112) which form angular ends of the cylindrical surface (9) of the semicylindrical body (11), said shoulders (112) being adapted to receive longitudinal edges (150) of the half ring (15).

6. Balancing shaft assembly according to claim 5, wherein the apex angle (α) of the angular sector on which half ring (15) extends is superior to 200°.

7. Balancing shaft assembly according to any of claims 5 and 6, wherein the shoulders (112) have a depth, with respect to the outer radius (R11) of the semicylindrical body (11), equal to the thickness (t15) of the half ring (15).

8. Balancing shaft assembly according to any preceding claim, wherein the semicylindrical body (11) comprises a planar surface (110) parallel to the central rotation axis (X-X') and adapted to be in contact with a corresponding planar surface (300) of the bearing area (3) of the balancing shaft (1).

9. Balancing shaft assembly according to any preceding claim, wherein the half ring (15) is located on the same side of the balancing shaft (1) as balancing masses (7).

10. Balancing shaft assembly according to any preceding claim, wherein the half ring (15) is made of a metallic material.

11. Balancing shaft assembly according to claim 10, wherein the half ring (15) is made from a sheet of steel.

12. Internal combustion engine comprising at least one balancing shaft assembly (A) according to any preceding claim.

## Patentansprüche

1. Ausgleichswellenanordnung (A), die Folgendes umfasst:
- eine Ausgleichswelle (1), die in Bezug auf ein Gehäuse (H) um eine zentrale Drehachse (X-X') drehbar ist,
- mindestens ein Lager (B), das die Drehung der Ausgleichswelle (1) in Bezug auf das Gehäuse (H) gestattet,
wobei jedes Lager (B) einen bei Drehung mit der Ausgleichswelle (1) gekoppelten Innenring (2), einen mit Bezug auf das Gehäuse (H) befestigten Außenring (6) und rollende Elemente (8) umfasst, wobei das mindestens eine Lager (B) an einer Lagerfläche (3) der Ausgleichswelle (1) montiert ist,
der Innenring (2) in einen ersten Abschnitt (11) und einen zweiten Abschnitt, ausgebildet durch einen Halbring (15), geteilt ist, wobei der Innenring (2) eine äußere Laufbahnoberfläche (2A) aufweist, die durch eine halbzylindrische Oberfläche (9) des ersten Abschnitts (11) und durch eine halbzylindrische Oberfläche (13) des Halbrings (15) ausgebildet ist, wobei der Halbring (15) einen äußeren Radius (R15) gleich dem äußeren Radius (R11) des ersten Abschnitts (11) aufweist,
**dadurch gekennzeichnet, dass** der erste Abschnitt (11) durch einen halbzylindrischen Körper ausgebildet ist, der gegen das Lager (3) der Ausgleichswelle (1) montiert ist,
und dadurch, dass der zweite, von dem Halbring (15) ausgebildete Abschnitt um einen halbzylindrischen Abschnitt (302) der Lagerfläche (3) der Ausgleichswelle (1) montiert ist.

2. Ausgleichswellenanordnung nach Anspruch 1, wobei der halbzylindrische Körper (11) aus einem synthetischen Material hergestellt ist.

3. Ausgleichswellenanordnung nach Anspruch 2, wobei das synthetische Material, aus dem der halbzylindrische Körper (11) hergestellt ist, Polyamid ist.

4. Ausgleichswellenanordnung nach einem der vorangehenden Ansprüche, wobei der Halbring (15) an dem halbzylindrischen Körper (11) und an der Ausgleichswelle (1) durch Klemmen befestigt ist.

5. Ausgleichswellenanordnung nach Anspruch 4, wobei sich der Halbring (15) um die Drehachse (X-X') auf einem winkligen Sektor erstreckt, der einen Scheitelwinkel (α) von über 180° aufweist, und wobei der halbzylindrische Körper (11) zwei Schultern (112) umfasst, die Winkelenden der zylindrischen Oberfläche (9) des halbzylindrischen Körpers (11) ausbilden, wobei die Schultern (112) dazu ausgelegt sind, Längskanten (150) des Halbrings (15) aufzunehmen.

6. Ausgleichswellenanordnung nach Anspruch 5, wobei der Scheitelwinkel (α) des winkligen Sektors, auf dem sich der Halbring (15) erstreckt, größer als 200° ist.

7. Ausgleichswellenanordnung nach einem der Ansprüche 5 und 6, wobei die Schultern (112) in Bezug auf den äußeren Radius (R11) des halbzylindrischen Körpers (11) eine Tiefe haben, die der Dicke (t15) des Halbrings (15) gleicht.

8. Ausgleichswellenanordnung nach einem der vorangehenden Ansprüche, wobei der halbzylindrische Körper (11) eine ebene Oberfläche (110) parallel zu der zentralen Drehachse (X-X') umfasst und dazu ausgelegt ist, in Kontakt mit einer entsprechenden ebenen Oberfläche (300) der Lagerfläche (3) der Ausgleichswelle (1) zu sein.

9. Ausgleichswellenanordnung nach einem der vorangehenden Ansprüche, wobei sich der Halbring (15) auf derselben Seite der Ausgleichswelle (1) wie ausgleichende Massen (7) befindet.

10. Ausgleichswellenanordnung nach einem der vorangehenden Ansprüche, wobei der Halbring (15) aus einem metallischen Material hergestellt ist.

11. Ausgleichswellenanordnung nach Anspruch 10, wobei der Halbring (15) aus einem Stahlblech hergestellt ist.

12. Verbrennungsmotor, der mindestens eine Ausgleichswellenanordnung (A) nach einem der vorangehenden Ansprüche umfasst.

## Revendications

1. Ensemble arbre d'équilibrage (A) comprenant :
un arbre d'équilibrage (1) pouvant tourner par rapport à un carter (H) autour d'un axe de rotation central (X-X'),
au moins un palier (B) permettant la rotation de l'arbre d'équilibrage (1) par rapport au carter (H),
chaque palier (B) comprenant une bague intérieure (2) accouplée en rotation à l'arbre d'équilibrage (1), une bague extérieure (6) fixée par rapport au carter (H), et des éléments roulants (8), ledit au moins un palier (B) étant monté sur une zone de palier (3) de l'arbre d'équilibrage (1),
la bague intérieure (2) étant divisée en une première partie (11) et une seconde partie formée par une demi-bague (15), la bague intérieure (2) ayant une surface de chemin de roulement externe (2A) formée par une surface semi-cylindrique (9) de la première partie (11) et par une surface semi-cylindrique (13) de la demi-bague (15), ladite demi-bague (15) ayant un rayon externe (R15) égal au rayon externe (R11) de la première partie (11),
**caractérisé en ce que** la première partie (11) est formée par un corps semi-cylindrique monté contre le palier (3) de l'arbre d'équilibrage (1),
et **en ce que** la seconde partie formée par la demi-bague (15) est montée autour d'une partie semi-cylindrique (302) de la zone de palier (3) de l'arbre d'équilibrage (1).

2. Ensemble arbre d'équilibrage selon la revendication 1, le corps semi-cylindrique (11) étant en un matériau synthétique.

3. Ensemble arbre d'équilibrage selon la revendication 2, le matériau synthétique dans lequel est réalisé le corps semi-cylindrique (11) étant le polyamide.

4. Ensemble arbre d'équilibrage selon l'une quelconque des revendications précédentes, la demi-bague (15) étant fixée au corps semi-cylindrique (11) et à l'arbre d'équilibrage (1) par serrage.

5. Ensemble arbre d'équilibrage selon la revendication 4, la demi-bague (15) s'étendant autour de l'axe de rotation (X-X') sur un secteur angulaire ayant un angle de sommet (α) supérieur à 180°, et le corps semi-cylindrique (11) comprenant deux épaulements (112) qui forment les extrémités angulaires de la surface cylindrique (9) du corps semi-cylindrique (11), lesdits épaulements (112) étant conçus pour recevoir les bords longitudinaux (150) de la demi-bague (15).

6. Ensemble arbre d'équilibrage selon la revendication 5, l'angle de sommet (α) du secteur angulaire sur lequel s'étend la demi-bague (15) étant supérieur à 200°.

7. Ensemble arbre d'équilibrage selon l'une quelconque des revendications 5 et 6, les épaulements (112) ayant une profondeur, par rapport au rayon extérieur (R11) du corps semi-cylindrique (11), égale à l'épaisseur (t15) de la demi-bague (15).

8. Ensemble arbre d'équilibrage selon l'une quelconque des revendications précédentes, le corps semi-cylindrique (11) comprenant une surface plane (110) parallèle à l'axe de rotation central (X-X') et conçue pour être en contact avec une surface plane (300) correspondante de la zone de palier (3) de l'arbre d'équilibrage (1).

9. Ensemble arbre d'équilibrage selon l'une quelconque des revendications précédentes, la demi-bague (15) étant située du même côté de l'arbre d'équilibrage (1) que les masses d'équilibrage (7).

10. Ensemble arbre d'équilibrage selon l'une quelconque des revendications précédentes, la demi-bague (15) étant en un matériau métallique.

11. Ensemble arbre d'équilibrage selon la revendication 10, la demi-bague (15) étant en une tôle d'acier.

12. Moteur à combustion interne comprenant au moins un ensemble arbre d'équilibrage (A) selon l'une quelconque des revendications précédentes.
